# EUROPEAN PATENT APPLICATION

(11) **EP 2 017 943 A2**
(43) Date of publication of application: **21.01.2009**
(21) Application number: 08159523.3
(22) Date of filing: 02.07.2008
(51) Int. Cl.: H02J 9/00, H02J 7/00

(54) **Battery operated device having power saving mode**

(30) Priority: 18.07.2007 EP 07301248
(71) Applicant: THOMSON Licensing, 92100 Boulogne-Billancourt (FR)
(72) Inventor: Lindemann, Robert, 30559, Hannover (DE); Aylott, Mark, 35250, Saint Aubin D'Aubigne (FR)
(74) Representative: Arnold, Klaus-Peter

(57) **Abstract**

A battery-powered electronic device comprises at least one functional circuit (4, 5, 6, 7, 8) and a controller (1) adapted to receive a signal representative of residual energy of a battery (3) powering the device and to cut off operating power of the functional circuit (6, 7, 8) if said residual energy is below a predetermined threshold. The controller (1) is further adapted to detect whether a predetermined criterion is fulfilled or not, to cut off operating power of the functional circuit only if the predetermined criterion has been fulfilled for a given time interval, and to set the duration of the time interval depending on said residual energy.

## Description

### FIELD OF THE INVENTION

The present invention relates to portable electronic devices such as digital cameras, mobile telephones, portable media players and the like.

### BACKGROUND OF THE INVENTION

Digital still cameras (DSC) and other portable consumer apparatus rely on batteries, either rechargeable or disposable, as a power source. Batteries, however, can only hold a limited amount of energy and often are out of power when the user needs to use the apparatus. Conservation of energy is thus a major issue when designing the electronic circuitry. It is therefore common in such apparatus to provide a controller for cutting off operating power of one or more functional circuits of the apparatus if the apparatus has not been manipulated by a user for a certain time, while maintaining powered only those functional circuits which are needed for bringing the apparatus quickly back into a fully operational state.

US 6 201 372 suggests to solve the problem of the batteries of a mobile telephone becoming exhausted at an inopportune instant by switching the mobile telephone into a low-current mode when it is detected that the residual operating time in which the telephone can be powered by the energy stored in the battery decreases below a user-determined threshold. This is a satisfying solution for a mobile telephone, which can thus switch off all its receiving functions at a certain battery level in order to ensure that there will be enough energy left in the battery to allow the user to make the telephone fully operative again for some time, so that he can place an urgent call when he needs it.

This solution is suitable for mobile phones, since it may be very important for a user to be able to call at a certain instant, while the possibility of being called may be much less important. For other types of electronic devices, such as digital cameras or media players, it is less adequate since the only help a user gets from such a device switching into a low current mode as disclosed in US 6 201 372 is a warning that batteries are low, which he might as well get from a conventional battery indicator.

### BRIEF SUMMARY OF THE INVENTION

The object of the present invention is to provide a battery-powered electronic device which is capable of issuing a warning if a battery is approaching exhaustion, and which by issuing that warning, is capable of extending the useful service life of the battery.

This object is achieved by a battery-powered electronic device comprising at least one functional circuit and a controller adapted to receive a signal representative of residual energy of a battery powering the device and to cut off operating power of the functional circuit if said residual energy is below a predetermined threshold, characterized in that the controller is further adapted to detect whether a predetermined criterion is fulfilled or not, to cut off operating power of the functional circuit only if the predetermined criterion has been fulfilled for a given time interval, and to set the duration of the time interval depending on said residual energy.

The criterion for the controller to reduce the duration of the time interval can be that the user interface was not manipulated by a user during said time interval. Another possible criterion for the controller is detection of absence of movement during said time interval in case a means for detecting movement is provided, such as an accelerometer, or a switch operated by inertia. Yet another criterion for the controller is the absence of data communication from or to the device for said time interval.

By the controller switching off an energy-consuming functional circuit such as e.g. a display illumination, the user is given a warning that the battery is low, and at the same time, power consumption of the device is reduced, so that the battery may last longer.

A battery monitor for providing said signal representative of the residual energy may be provided in the device.

Alternatively, such a monitor may be included in the battery. In that case, a terminal for receiving said signal representative of the residual energy should be provided in a battery compartment of the device.

Another alternative embodiment uses calculations based upon a known initial energy state at the beginning of operation and known power consumption during operation for determining the residual energy of the battery at any time.

Preferably, there are at least two functional circuits in the device, and the controller is adapted to cut off operating power of a first one of said functional circuits while maintaining operating power of a second one of said functional circuits. By appropriately choosing the functions of the first and second functional circuits, e.g. display illumination as a function of the first functional circuit and playback in a media player or image recording in a camera as functions of the second user circuits, satisfactory operation of the device can be ensured for a long time in spite of low batteries.

Preferably the controller is adapted to reduce the duration by a step when the residual energy decreases below a predetermined threshold, in order to produce a change in the operation of the device which will be noticed by a user. To this effect, the duration should preferably be reduced by at least one third.

A user interface may be provided for allowing a user to set the duration of the time interval to an initial value, the controller being adapted to set said duration to a second, smaller value when the residual energy decreases below a predetermined threshold. The second value may also be set by the user, it can be predetermined, or it can be a predetermined fraction of the first value.

### BRIEF DESCRIPTION OF THE DRAWINGS

Further features and advantages of the invention will become apparent from the subsequent description of embodiments thereof referring to the appended figures.
- Fig. 1: is a block diagram of a portable electronic device according to the present invention; and
- Fig. 2: illustrates the discharging characteristic of a battery.

### DETAILED DESCRIPTION OF PREFERRED EMBODIMENTS

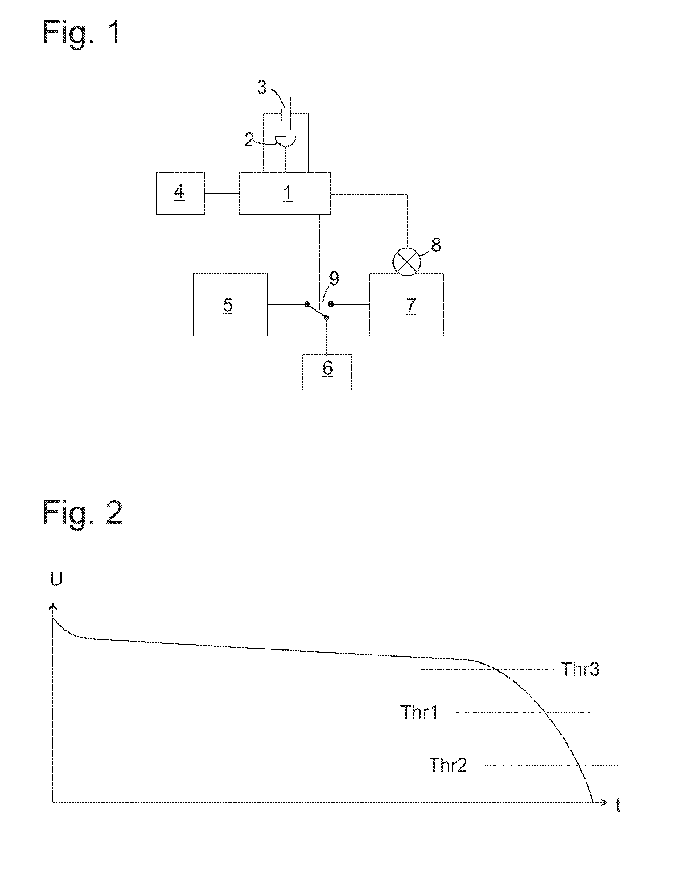

Fig. 1 is a block diagram of a digital still camera (DSC) embodying the present invention. A controller comprising e.g. a microcontroller and at least one switch is denoted 1. The controller has a battery power monitor 2 connected to it for estimating the residual energy stored in a battery 3 powering the controller and other components 4-8, still to be described, of the DSC. The battery power monitor 2 may have different conventional operating principles, e.g. detecting the voltage at the contacts of battery 3 under load, integrating discharging (and, in case of a rechargeable battery, charging) currents of the battery 3, and the like. The battery power monitor 2 may be an integral component of the device, or it may form a unit together with battery 3, in which case it is connected to controller 1 via a dedicated connector in a battery compartment, not shown, of the DSC.

A user interface 4 comprises a plurality of keys which can be manipulated by a user in order to control operation of the DSC. These keys may e.g. comprise keys for setting the focal plane of a lens of the DSC, for setting an operating mode to photographing or display modes, for setting operating parameters such as a delay time for entering a power saving mode, and a trigger key for triggering focusing and exposure.

An image sensor is denoted 5, and 6 is a recording circuitry comprising a flash image memory. Controller 1 controls a switch 9 for forwarding image data from image sensor 5 to recording circuitry 6 or to an electronic viewfinder 7 illuminated by a lamp 8. Power of the lamp 8 is controlled by one of the switches of controller 1.

Let us assume that the user has set the delay time for the power saving mode to e.g. 30 seconds. In that case, in the normal photographing mode the viewfinder 7 is illuminated by lamp 8, and after each manipulation of user interface 4 the controller 1 will wait 30 seconds before entering a power saving mode in which lamp 8 is switched off. If the user interface 4 is manipulated during the power saving mode, lamp 8 is switched on again, whereby the normal photographing mode is restored.

If the battery power monitor 2 indicates that the residual energy stored in the battery 3 is below a predetermined fraction of its nominal capacity, Thr1, the controller 1 overrides the delay time set by the user by a time which is noticeably shorter, e.g. 10 seconds. Thus the user is reminded by the viewfinder 7 going dark that battery power is low, and that he must not spend too much energy choosing a view but that he should rather shoot quickly.

There may be more than one threshold at which the controller 1 reduces the delay time, as illustrated in Fig. 2, which illustrates a typical development of battery voltage under load U with time t if the battery 3 is discharged at a constant current.

The circuits which have their power cut off in the power saving mode may vary from one embodiment of the invention to the other. In the embodiment described above, switching off lamp 8 does not affect the operability of image sensor 5 and recording circuitry 6, so that when the trigger is pressed, a photograph can be recorded as quickly as if the camera had been in the normal photographing mode. The same is true if in the power saving mode not only the power of the lamp 8 but also that of viewfinder 7 is cut off.

To save still more power, the supply of the recording circuitry 6 might also be cut off in the power saving mode. If this is done, there can be a delay between the manipulation of the user interface 4 and the return to the normal photographing mode, because the recording circuitry 6 needs time to become fully operational again.

According to another embodiment, the camera supports a plurality of power saving modes which differ by their respective associated thresholds, by the number of circuits that have their power cut off, and, eventually, in consequence, by the delay between manipulation of the user interface 4 and the return to the normal photographing mode. E.g. when the residual energy in the battery drops below a first threshold Thr1, only lamp 8 and viewfinder 7 have their power cut off, and the delay for entering power saving mode is decreased to e.g. a third of the value set by the user. When the residual energy drops below a second threshold Thr 2 which is lower than the first, the delay for entering power saving mode is reduced to e.g. not more than 1 s, and not only power of lamp 8 and viewfinder 7 is cut off, but also that of recording circuitry 6.

The invention is applicable not only to the photographing mode of a DSC, but also to the mode in which a user watches images previously taken. In this mode the image sensor 5 and the recording circuitry 6 need not be active, regardless of whether the battery is low or not. When the battery is full or sufficiently charged, the controller 1 cuts off power to the lamp 8 and, eventually, also the viewfinder 7 if the user interface 4 has not been manipulated for e.g. 30 s. If the energy of the battery drops below a third threshold Thr3, the delay before cutting off power of lamp 8 and viewfinder 7 is reduced to e.g. 10 s. This third threshold Thr3 may be the same as the first one. In view of the fact that a user's need to watch photos already taken is less urgent than the need to take new photos, it may be appropriate to set the third threshold Thr3 higher than the first threshold Thr1. In other words, the thresholds may also vary between various operating modes of a device.

The invention is straightforwardly applicable to other kinds of battery-operated electronic devices, including portable computers and portable digital assistants, or PDAs. In case of a media player, e.g. an mp3-player, the main objective of a user is to listen to music. The display of such a device is used only for selecting stored songs. Reducing the time during which the display remains active after the user interface has been manipulated in case of low battery power does not constitute a major drawback for the user when this allows for listening to music for a longer time.

In the case of a video player, the device may switch the frame rate from a first, higher frame rate to a second, lower frame rate. In this case the computational load to a decoder is reduced and so is the required energy. This would allow watching a movie to the very end, though at a reduced frame rate, rather than not being able to see the end of the movie and possibly missing the climax or show-down. As an alternative the resolution of the video could be reduced, which may also reduce the computational power of a decoder or, if applicable, the power required for operating a display. An example for displays the power consumption of which depends upon the resolution of an input video signal is OLED displays. In OLED displays black pixels do not consume energy. Hence, in an exemplary 640 x 480 native resolution OLED display, if the video resolution is set from a higher value, e.g. 640 x 480 pixels, to a lower value, e.g. 320 x 240, the user would see a smaller video surrounded by a black frame. However, this would allow for an extended viewing time, since the black frame does not require any power for display.

Another option for reducing the power consumption in accordance with the invention is a reduction of the brightness of a screen's or monitor's background illumination depending on the energy status of the device.

Also other embodiments of the invention can be made by a person skilled in the art without departing from the spirit and scope of the invention. One of the functional circuits can be alternatively a means for detecting movement, for example a remote controller for a game console, and the predetermined criterion being for the controller a detection of absence of movement during said given time interval. One of the functional circuits can be alternatively also a data communication circuit, for example a cordless phone or a cellular phone, and the criterion for the controller being the absence of data communication from or to the device for said given time interval. The invention resides therefore in the claims herein after appended.

## Claims

1. Battery-powered electronic device comprising at least one functional circuit (4, 5, 6, 7, 8) and a controller (1) adapted to receive a signal representative of residual energy of a battery (3) powering the device and to cut off operating power of the functional circuit (6, 7, 8) if said residual energy is below a predetermined threshold, **characterized in that** the controller (1) is further adapted to detect whether a predetermined criterion is fulfilled or not, to cut off operating power of the functional circuit only if the predetermined criterion has been fulfilled for a given time interval, and to set the duration of the time interval depending on said residual energy, wherein one of the functional circuits (4, 5, 6, 7, 8) is a user interface (4) and the predetermined criterion being for the controller that the user interface (4) was not manipulated by a user during said given time interval, or wherein one of the functional circuits is a means for detecting movement and the predetermined criterion being for the controller a detection of absence of movement during said given time interval, or wherein one of the functional circuits is a data communication circuit and the criterion for the controller being the absence of data communication from or to the device for said given time interval.

2. The device of claim 1, further comprising a battery monitor (2) for providing said signal representative of the residual energy.

3. The device of claim 1, further comprising a battery compartment in which is provided a terminal for receiving said signal representative of the residual energy.

4. The device of any of the preceding claims, wherein there are at least two functional circuits (4, 5, 6, 7, 8), and the controller is adapted to cut off operating power of a first one (6, 7, 8) of said functional circuits while maintaining operating power of a second one (4, 5) of said functional circuits.

5. The device of claim 4, wherein the first circuit comprises display illumination means (8).

6. The device of any of the preceding claims, wherein the controller (1) is adapted to reduce the duration by a step when the residual energy decreases below a predetermined threshold.

7. The device of any of the preceding claims, comprising means (4) for allowing a user to set the duration of the time interval to an initial value, the controller (1) being adapted to set said duration to a second, smaller value when the residual energy decreases below a predetermined threshold.

8. The device of claim 6 or 7, wherein the threshold is additionally dependent on a respective operating mode of the device.

9. The device of any of the preceding claims, wherein the device is selected from the group comprising mobile telephones, portable media players and cameras.
